Europäisches Patentamt

European Patent Office

Office européen des brevets

(11) Veröffentlichungsnummer: **0 324 381**
**A2**

(12) **EUROPÄISCHE PATENTANMELDUNG**

(21) Anmeldenummer: **89100174.5**

(22) Anmeldetag: **05.01.89**

(51) Int. Cl.⁴: **H04B 1/74**

(30) Priorität: **12.01.88 BG 82604/88**

(43) Veröffentlichungstag der Anmeldung:
**19.07.89 Patentblatt 89/29**

(84) Benannte Vertragsstaaten:
**CH DE FR GB LI NL**

(71) Anmelder: **BULGARSKA TELEVISIA kam
KOMITET sa TELEVISIA i RADIO
San-Stefano Strasse 29
Sofia(BG)**

(72) Erfinder: **Pentchev, Vladkov Emil
Komplex Serdika Block 21 App.40
BU-1303 Sofia(BG)**
Erfinder: **Dimitrov, Mihaylov Dobri
V. Muletarov Street 10 Block 22
BU-Sofia(BG)**

(74) Vertreter: **Ebbinghaus, Dieter et al
Patentanwälte v. Füner, Ebbinghaus, Finck
Mariahilfplatz 2 & 3
D-8000 München 90(DE)**

(54) **Automatischer Bypass.**

(57) Der erfindungsgemäße automatische Bypass findet Anwendung in linear arbeitenden Fernsehstudio- und anderen wesentlichen Fernseheinrichtungen, bei deren fehlerhaftem Verhalten oder Störung die Signalübertragung nicht unterbrochen werden darf. Er ist auf dem Prinzip des Vergleichs der Hauptparameter des Eingangs- und des Ausgangssignals der überwachten Apparatur aufgebaut, bei welchem Parameter das Verarbeitungsprodukt oder entsprechende Veränderungen des Informationssignals ausgeschlossen werden. Der Bypass enthält einen zweistufigen Differenzverstärker (6) mit Differenzausgängen, ein logisches System, das den Zustand des Signals durch eine Funktion überwacht, die der eines exclusiven ODERs ähnlich ist und ein selbstverzögerndes elektronisches Hysterese-System. Die Bypass-Umschaltung erfolgt durch ein Relais.

## AUTOMATISCHER BYPASS

Die Erfindung bezieht sich auf einen automatischen Bypass, der in der Fernseh-Studiotechnik während des Sendebetriebs oder zur Sicherung in Fehlersituationen im Fernseh-Übertragungsweg verwendet wird, z.B. für signalverarbeitende lineare Vorrichtungen (lärmdämpfende, Einführungs-, korrigierende und ähnliche), bei denen sich die niederfrequente und in gewissen Grenzen die mittelfrequente Energie der Signale nicht wesentlich ändert. Aus dem Katalog der Firma Philips, PTV Professional Television Measuring Equipment, 1986 - 1987, S. 109, ist bereits ein automatischer Bypass der im Oberbegriff des Patentanspruchs 1 beschriebenen Art bekannt. Ein Nachteil des bekannten Bypasses besteht darin, daß er nur beim Ausschalten der Spannung der Verarbeitungseinheit vollständig oder teilweise anspricht, wobei die Veränderung der Parameter des Ausgangssignals, z.B. wenn infolge des Defekts der Betrieb verschlechtert oder das Ausgangssignal ausgeschaltet wird, nicht in Betracht gezogen wird. Ein weiterer Nachteil des bekannten Bypasses ist die Möglichkeit, daß mehrmals in instabiler Weise umgeschaltet werden kann, wenn die Speisung instabil ist oder unterbrochen wird, wodurch die Übertragung des Signals unmöglich wird.

Der Erfindung liegt die Aufgabe zugrunde, einen automatischen Bypass mit erweiterten funktionellen Möglichkeiten zu schaffen. Insbesondere soll der Zustand der Parameter der Signale überwacht und bei instabilem Betrieb, einschließlich einer instabilen Spannung, in einen stabilen eingeschalteten Zustand übergegangen werden, so daß eine ununterbrochene Übertragung des Signals gewährleistet ist.

Diese Aufgabe wird erfindungsgemäß durch den im Patentanspruch 1 beschriebenen automatischen Bypass gelöst.

Eine bevorzugte Weiterbildung des erfindungsgemäßen automatischen Bypasses ist Gegenstand des Patentanspruchs 2.

Vorteil des erfindungsgemäßen Bypasses sind seine erweiterten funktionellen Möglichkeiten. Einerseits werden die Hauptparameter des Ausgangssignals einschließlich der konstanten Komponente des Signals mit verringertem Pegel und γ-Verzerrungen ständig überwacht. Andererseits wird die Vorrichtung stabil ausgeschaltet und in den Bypass-Betriebszustand geschaltet, wenn bestimmte Werte der überwachten Parameter oder der Speisespannung verändert werden. Diese Eigenschaften sichern eine hohe funktionelle Zuverlässigkeit des Fernseh-Übertragungsweges.

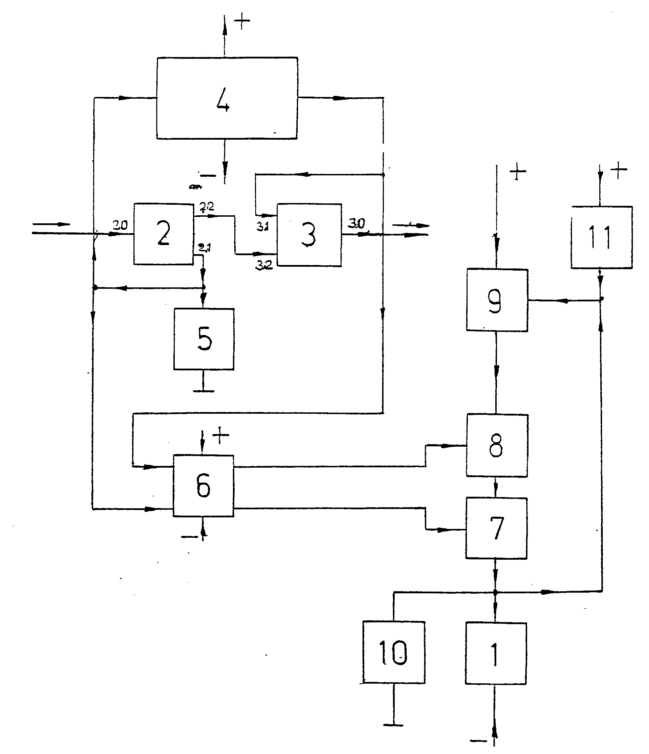

Ein Ausführungsbeispiel des erfindungsgemäßen automatischen Bypasses wird anhand der Zeichnung erläutert, die ein Blockschaltbild des erfindungsgemäßen Bypasses darstellt.

Der automatische Bypass enthält ein elektromagnetisches Relais 1 mit einem ersten und einem zweiten Kontaktumschalter 2 bzw. 3. Der bewegliche Kontakt 2.0 des ersten Kontaktumschalters 2 steht mit dem Signaleingang in Verbindung, sein Arbeitskontakt 2.1 ist mit dem Eingang einer Verarbeitungseinheit 4 und mit der an Masse liegenden Last 5 der Eingangsleitung 4 und mit der an Masse liegenden Last 5 der Eingangsleitung verbunden. Der Ruhekontakt 2.2 des Umschalters 2 ist mit dem Ruhekontakt 3.2 des zweiten Kontaktumschalters 3 verbunden, dessen Arbeitskontakt 3.1 mit dem Signalausgang der Verarbeitungseinheit 4 und dessen beweglicher Kontakt 3.0 an den Ausgang des automatischen Bypasses angeschlossen ist. Die Spule des Relais 1 ist an den positiven und den negativen Pol der Speisespannungsquelle angeschlossen. Der Arbeitskontakt 2.1 des ersten Umschalters 2 ist mit einem der beiden Eingänge eines zweitstufigen Differenzverstärkers 6 mit Differenzausgängen verbunden, dessen zweiter Eingang an den Signalausgang der Verarbeitungseinheit 4 angeschlossen ist. Die beiden Differenzausgänge des Differenzverstärkers 6 stehen mit den Steuereingängen zweier elektronischer Schalter 7 bzw. 8 in Verbindung. Der positive Pol der Speisespannungsquelle ist über eine Reihenschaltung aus einem Spannungstranslator 9 und die beiden elektronischen Schalter 8, 7 an die Spule des Relais 1 geführt. Der erste elektronische Schalter ist an den Steuereingang des Spannungstranslators 9 und über einen Kondensator 10 an Masse geführt. Zwischen dem positiven Pol der Speisespannungsquelle und dem Steuereingang des Spannungstranslators 9 liegt eine automatische Einschalteinheit 11.

Der erfindungsgemäße automatische Bypass arbeitet folgendermaßen:

Im einwandfreien Betriebszustand der Verarbeitungseinheit 4 ist das Relais 1 eingeschaltet und das Eingangssignal ist über die Arbeitskontakte 2.0 - 2.1 und 3.0 - 3.1 an den Eingang der Verarbeitungseinheit 4 geführt. Der Ausgang der Verarbeitungseinheit ist ein Ausgang des automatischen Bypasses. Die Eingänge des Differenzverstärkers 6 stehen mit dem Eingang bzw. Ausgang der Verarbeitungseinheit 4 in Verbindung. Wenn das Eingangs- und das Ausgangssignal der Verarbeitungseinheit 4 gleich sind, führen die Ausgänge des Differenzverstärkers 6 gleiche und konstante Spannungen. Diese Spannungen und die vom Translator 9 transformierte positive Speisespannung halten die elektronischen Schalter 7 und 8 im eingeschalteten Zustand, wobei das Relais 1 unter Spannung ist und die Arbeitskontakte der Kontaktumschalter 2, 3 geschlossen sind. Unterscheiden sich bei fehlerhafter Funktion der Verarbeitungseinheit 4 die Signale an den Eingängen des Differenzverstärkers 6, so wird dieser Unterschied so verstärkt, daß die Ausgangsspannungen des Differenzverstärkers 6 nicht mehr gleich und konstant bleiben. In Abhängigkeit vom Vorzeichen des Unterschieds am Eingang des Differenzverstärkers 6 verändern sich die Steuerspannungen der elektronischen Schalter 7 und 8 in Richtung zum Ausschalten des ersten elektronischen Schalters 7 und zum eingeschalteten Zustand des zweiten elektronischen Schalters 8 oder umgekehrt - Ausschalten des zweiten und Einschalten des ersten elektronischen Umschalters 8 bzw. 7. Übersteigt der Unterschied zwischen Eingangs- und Ausgangssignal einen bestimmten Wert, so wird in Abhängigkeit von seinem Vorzeichen einer der beiden elektronischen Umschalter 7, 8 ausgeschaltet, so daß das Relais 1 stromlos wird und dem Steuereingang des Translators 9 über die Wicklung des Relais 1 eine negative Spannung zugeführt wird. Hierdurch wird die Ausgangsspannung des Translators 9 in Richtung zur negativen Seite verschoben, wodurch die beiden elektronischen Umschalter 7, 8 stabil ausgeschaltet bleiben. Gleichzeitig schließen die Ruhekontakte 2.0 - 2.1 und 3.0 - 3.1 der Umschalter 2, 3, so daß das Signal vom Ein- und Ausgang der Verarbeitungseinheit 4 getrennt und vom Eingang des Bypasses direkt auf seinen Ausgang geschaltet wird.

Wenn man in Betracht zieht, daß das Ausgangs- und das Eingangssignal der Verarbeitungseinheit 4 bei Vorhandensein einer Trägerfrequenz für die Farbigkeit niemals phasengleich und bei Hochfrequenzbehandlung auch nicht amplitudengleich sein können, was des öfteren die Hauptfunktion der Verarbeitungseinheit 4 ist, z.B. als korrigierender Verstärker, muß der Differenzverstärker 6 die Charakteristik eines Tiefpassfilters mit einer Schnittfrequenz von etwa 2 MHz haben, wodurch derselbe gegenüber Unterschieden außerhalb des Durchlaßbereiches unempfindlich und die normale Funktion gesichert wird.

Durch die Verzögerung zwischen dem Ausgangs- und dem Eingangssignal der Verarbeitungseinheit 4 kommen wesentliche Amplitudenunterschiede zustande, insbesondere bei Signalen mit einer Dynamik in der Helligkeit, wodurch in den geschlossenen elektronischen Umschaltern 7 und 8 Spannungsspitzen hervorgerufen werden. Noch stärker ist der Einfluß infolge eines wesentlicheren funktionellen Unterschiedes, z.B. beim Einführen einer graphischen Information, Buchstaben und anderer in die Verarbeitungseinheit 4. Um den Einfluß des impulshaltigen Schließens der Schalter 7 und 8 unter diesen Verhältnissen zu vermeiden, wird das Potential am Relais von der integrierenden Wirkung des Kondensators 10 aufrecht erhalten, der gleichzeitig den normalen Betriebszustand des Translators 9 aufrechterhält. Durch geeignete Wahl des Kondensators 10 kann die erforderliche Empfindlichkeit des automatischen Bypasses gewählt werden. Seine Kapazität hat auf jeden Fall eine relativ schwache Wirkung auf die Empfindlichkeit der Gleichstrom-Eingangs-Ausgangs-Pegel und der niederfrequenten Bestandteile des Signals, die den größten Teil der Signalenergie ausmachen und für die Kontrolle der oben beispielsweise angeführten Parameter maßgebend sind. Die Empfindlichkeit kann durch Bestimmung des Übertragungsfaktors des Differenzverstärkers 6 reguliert werden. Bei Vorhandensein eines natürlichen Unterschiedes zwischen dem Eingangs-Gleichstrompegel und dem Fixierpegel 0 in der Verarbeitungseinheit 4 kann dieser Unterschied durch Verschieben des Arbeitspunktes des Differenzverstärkers 6 zuvor kompensiert werden.

Beim Abschalten oder bei Schwankungen der Speisespannung wird die Funktion des automatischen Bypasses aufrechterhalten.

Das automatische Einschalten wird durch die automatische Einschalteinheit 11, die bei der ursprünglichen Inbetriebnahme in Funktion tritt, gewährleistet. Die Einschalteinheit 11 führt dem Steuereingang des Translators 9 ein hohes positives Potential zu, bis die elektronischen Schalter 7 und 8 eingeschaltet sind, wonach sie durch ihre eigene Zeitkonstante wirkungslos wird.

Der automatische Bypass kann wie folgt manuell gesteuert werden: Wiederholtes Einschalten in dem Verarbeitungsbetrieb - Arbeitszustand durch einen kurzen Kontakt zwischen Ein- und Ausgang des Translators 9, durch Ausschalten des automatischen Vergleichs der Signale durch Einschalten der positiven Speisespannung über einen Reihenwiderstand an das Relais 1 und durch Ausschalten der Funktion der Verarbeitungseinheit 4 durch Unterbrechen des negativen Pols der Speisespannungsquelle zum Relais 1 (diese Funktionen sind in der Figur nicht dargestellt).

Der Spannungstranslator 9 wird vorzugsweise als als Emitterfolger geschalteter npn-Transistor ausgeführt, die elektronischen Umschalter 7 und 8 sind vorzugsweise pnp-Transistoren. Eine gegenpolare Kombination dieser Elemente ist möglich.

Ein zusätzlicher Effekt der Erfindung ergibt sich, wenn man den Differenzverstärker 6, der eine Verstärkung von 100 und mehr haben kann, zur Einstellung und Kontrolle der Parameter der Verarbeitungs-Einheit 4 benutzt, wobei eine Nullstellung der Unterschiede an einem der Ausgänge des Differenzverstärkers 6 erforderlich ist. In einem solchen Betriebszustand wird die oben beschriebene Funktion des automatischen Vergleichs der Signale ausgeschaltet.

## Ansprüche

1. Automatischer Bypass
- mit einem elektromagnetischen Relais (1),
-- dessen Wicklung an den positiven und den negativen Pol einer Speisespannungsquelle angeschlossen ist und das
-- einen ersten und einen zweiten Umschalter (2 bzw. 3) aufweist,
-- deren beweglicher Kontakt (2.0 bzw. 3.0) mit dem Signalein- bzw. - ausgang verbunden ist und deren Ruhekontakte (2.2, 3.2) miteinander verbunden sind, wobei
-- der Arbeitskontakt (2.1) des ersten Kontaktumschalters (2) mit dem Eingang einer Verarbeitungseinheit (4) und der einen Seite einer mit ihrer anderen Seite an Masse liegenden Last (5) verbunden ist,
dadurch **gekennzeichnet, daß**
- der Arbeitskontakt (2.1) des ersten Umschalters (2) an einen der beiden Eingänge eines zweistufigen Differenzverstärkers (6) mit Differenzausgängen angeschlossen ist,
- der Signalausgang der Verarbeitungseinheit (4) an den zweiten Eingang des Differenzverstärkers (6) und an den Arbeitskontakt (3.1) des zweiten Kontaktumschalters (3) angeschlossen ist,
- die Wicklung des elektromagnetischen Relais (1) über einen ersten und einen zweiten elektronischen Schalter (7 bzw. 8) und einen Spannungstranslator (9) an den positiven Pol der Speisespannungsquelle angeschlossen ist,
- die Ausgänge des Differenzverstärkers (6) an den Steuereingang des ersten bzw. zweiten elektronischen Schalters (7, 8) angeschlossen sind und
- der Ausgang des ersten elektronischen Schalters (7) über einen Kondensator (10) an Masse geführt ist.

2. Bypass nach Anspruch 1, dadurch **gekennzeichnet, daß** zwischen den positiven Pol der Speisespannungsquelle und den Steuereingang des Spannungstranslators (9) eine automatische Einschalteinheit (11) geschaltet ist.

EPAB-37290.7